(19) Europäisches Patentamt
European Patent Office
Office européen des brevets

(11) **EP 4 742 114 A1**

(12) **EUROPEAN PATENT APPLICATION**

(43) Date of publication:
**13.05.2026 Bulletin 2026/20**

(21) Application number: **25212947.3**

(22) Date of filing: **03.11.2025**

(51) International Patent Classification (IPC):
***G06N 10/40*** *(2022.01)* ***G06N 5/01*** *(2023.01)*

(52) Cooperative Patent Classification (CPC):
**G06N 5/01; G06N 10/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.11.2024 JP 2024195008**

(71) Applicant: **Fujitsu Limited**
**Kawasaki-shi, Kanagawa 211-8588 (JP)**

(72) Inventor: **MURAKAMI, Ryo**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **COMPUTER PROGRAM, QUANTUM GATE CALIBRATION METHOD, AND INFORMATION PROCESSING APPARATUS**

(57) An information processing apparatus selects a first value for each of a plurality of control parameters for controlling a plurality of pulse signals used by a quantum computer in executing a multi-input quantum gate, estimates a first error from the first values by using an error function for estimating an error between an ideal value and an actual value of the multi-input quantum gate from values of the plurality of control parameters, searches for a second value of each of the plurality of control parameters by using the error function such that a second error estimated from the second values is less than the first error, acquires a result obtained by executing the multi-input quantum gate by using the second values from the quantum computer, and determines a third value to be set to each of the plurality of control parameters by using the result.

FIG. 1

**Description**

FIELD

The embodiments discussed herein relate to a computer program, a quantum gate calibration method, and an information processing apparatus.

BACKGROUND

A quantum computer may emit a pulse signal to a qubit with as a physical implementation of a quantum operation corresponding to a quantum gate. Due to physical restrictions and use environments, the pulse signal to be emitted may fail to be an ideal signal. Thus, the quantum gate may have an error that indicates a deviation from an ideal effect regarding the qubit.

Therefore, the quantum computer may have control parameters for adjusting the waveform of the pulse signal, such as the pulse length and the amplitude. The user may perform calibration by measuring the error of the quantum gate of the quantum computer and changing control parameter values so as to reduce the error. For example, optimized randomized benchmarking for immediate turn-up (ORBIT) measures the fidelity of a quantum gate and searches for a control parameter value that maximizes the fidelity with a search algorithm such as the Nelder-Mead method.

In addition, among quantum gates, there is a multi-input quantum gate that acts on a plurality of qubits, such as a controlled NOT (CNOT) gate that acts on two qubits. For example, in a cross resonance (CR) method, a pulse signal having a resonance frequency that resonates with a target bit is emitted to a control bit. In this way, the quantum state of the target bit changes depending on the quantum state of the control bit.

It is not easy for a quantum computer to implement a multi-input quantum gate with high accuracy by using only one type of pulse signal. Therefore, the quantum computer may implement a multi-input quantum gate by combining a plurality of pulse signals. For example, the quantum computer may emit an additional pulse signal, such as a cancellation tone or a rotary tone, to a qubit, in addition to the main CR pulse.

In an analog processor in which quantum devices are arranged in a grid pattern, there is a technique of setting an inter-device coupling value or a local bias value and adjusting a runtime control parameter. There is also a technique in which, at the time of initialization of quantum hardware, each superconducting cavity receives a variable amount of photons such that the photons of the two coupled superconducting cavities interact. There is also a technique for reducing the influence of degeneration in a hybrid computing system including a quantum processor and a digital processor. There is also a technique of modeling a quantum device by using a Hamiltonian matrix and estimating optimum values of physical parameters of the quantum device. See, for example, the following literatures.

U.S. Patent Application Publication No. 2011/0298489
International Publication Pamphlet No. WO 2015/160401
International Publication Pamphlet No. WO 2017/075246
International Publication Pamphlet No. WO 2019/005206
J. Kelly, R. Barends, B. Campbell, Y. Chen, Z. Chen, B. Chiaro, A. Dunsworth, A.G. Fowler, I. Hoi, E. Jeffrey, A. Megrant, J. Mutus, C. Neill, P.J.J. O'Malley, C. Quintana, P. Roushan, D. Sank, A. Vainsencher, J. Wenner, T.C. White, A.N. Cleland, and John M. Martinis, "Optimal Quantum Control Using Randomized Benchmarking," Physical Review Letters, Volume 112, Issue 24, June 2014
Petar Jurcevic, Ali Javadi-Abhari, Lev S. Bishop, Isaac Lauer, Daniela F. Bogorin, Markus Brink, Lauren Capelluto, Oktay Gunluk, Toshinari Itoko, Naoki Kanazawa, Abhinav Kandala, George A. Keefe, Kevin Krsulich, William Landers, Eric P. Lewandowski, Douglas T. McClure, Giacomo Nannicini, Adinath Narasgond, Hasan M. Nayfeh, Emily Pritchett, Mary Beth Rothwell, Srikanth Srinivasan, Neereja Sundaresan, Cindy Wang, Ken X. Wei, Christopher J. Wood, Jeng-Bang Yau, Eric J. Zhang, Oliver E. Dial, Jerry M. Chow, and Jay M. Gambettal, "Demonstration of Quantum Volume 64 on a Superconducting Quantum Computing System", Quantum Science and Technology, Volume 6, Number 2, March 2021

When a multi-input quantum gate is implemented by combining a plurality of pulse signals, the quantum computer may have a plurality of control parameters for adjusting the waveforms of the plurality of pulse signals. However, when the number of control parameters is large, the parameter adjustment method of repeatedly measuring the error of the quantum gates may take a long time to gain the control parameter values at which the error is sufficiently small, and may fail to attain the optimum values within a practical time.

SUMMARY

In one aspect, an object of the present disclosure is to calibrate quantum gates more efficiently.

In one aspect, there is provided a computer program that causes a computer to execute a process including: selecting a first value for each of a plurality of control parameters for controlling a plurality of pulse signals used by a quantum computer in executing a multi-input quantum gate; estimating a first error from the first values by using an error function for estimating an error between an ideal value and an actual value of the multi-input quantum gate from values of the plurality of control parameters; searching for a second value of each of the plurality of control parameters by using the error function such that a second error estimated from the second values is less than the first error; and acquiring a result obtained by executing the multi-input quantum gate by using the second values from the quantum computer, and determining a third value to be set to each of the plurality of control parameters by using the result.

BRIEF DESCRIPTION OF DRAWINGS

FIG. 1 is a diagram illustrating an information processing apparatus according to a first embodiment;
FIG. 2 is a diagram illustrating an example of hardware of an information processing system according to a second embodiment;
FIG. 3 is a diagram illustrating an operation example of a quantum state by a quantum gate;
FIG. 4 is a diagram illustrating examples of a microwave pulse signal;
FIG. 5 is a diagram illustrating an operation example of a quantum state by a two-input quantum gate;
FIG. 6 is a diagram illustrating an example of a combination of a plurality of microwave pulse signals;
FIG. 7 is a diagram illustrating an example of control parameters;
FIG. 8 is a diagram illustrating an example of Hamiltonian coefficients;
FIG. 9 is a graph illustrating an example of the relationship between the rotary tone amplitude and the error;
FIG. 10 is a graph illustrating an example of the relationship between the cancellation tone amplitude and the error;
FIG. 11 is a graph illustrating an example of the relationship between the number of quantum gate iterations and the fidelity;
FIG. 12 is a block diagram illustrating a functional example of the information processing apparatus;
FIG. 13 is a flowchart illustrating a procedure example of quantum gate calibration; and
FIG. 14 is a flowchart illustrating a procedure example of model-based optimization.

DESCRIPTION OF EMBODIMENTS

Hereinafter, embodiments will be described with reference to the drawings.

(a) First Embodiment

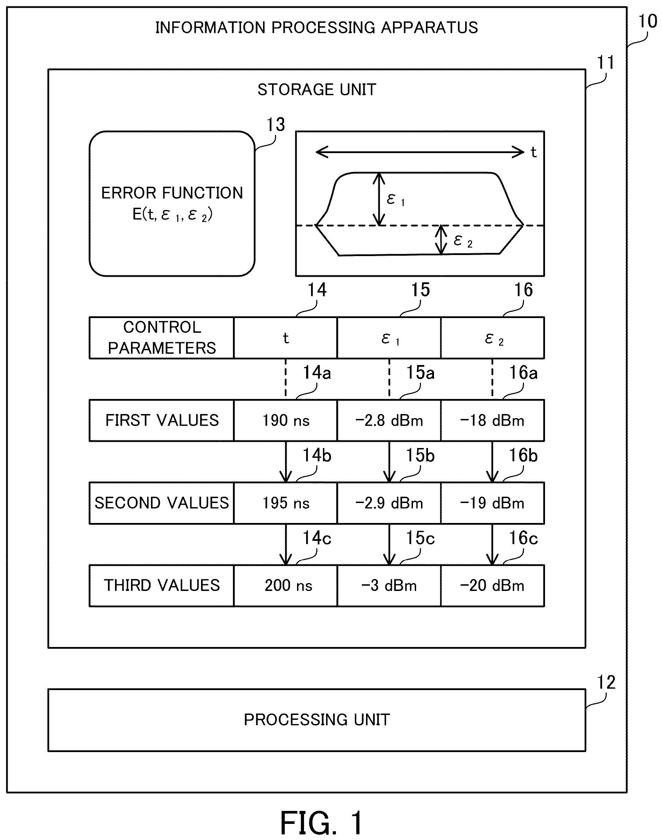

FIG. 1 is a diagram illustrating an information processing apparatus according to a first embodiment. An information processing apparatus 10 according to the first embodiment calibrates an individual quantum gate implemented in a quantum computer. The information processing apparatus 10 is, for example, a von Neumann classical computer. The information processing apparatus 10 may be a client apparatus or a server apparatus. The information processing apparatus 10 may be referred to as a computer or a quantum gate calibration apparatus.

The information processing apparatus 10 includes a storage unit 11 and a processing unit 12. The storage unit 11 may be a volatile memory such as a random-access memory (RAM). The storage unit 11 may be a non-volatile storage such as a hard disk drive (HDD) or a solid-state drive (SSD).

The processing unit 12 is, for example, a processor such as a central processing unit (CPU), a graphics processing unit (GPU), or a digital signal processor (DSP). However, the processing unit 12 may include an electronic circuit such as an application specific integrated circuit (ASIC) or a field programmable gate array (FPGA). The processor executes, for example, a program stored in a memory such as a RAM. The processor may be referred to as a processor circuitry. A set of processors may be referred to as a multiprocessor or simply as a "processor". Different processes among a plurality of processes to be described below may be executed by different processors.

The storage unit 11 stores an error function 13 (error function E). The error function 13 is a model for estimating the error between an ideal value and an actual value of a multi-input quantum gate from values of a plurality of control parameters. A multi-input quantum gate is a quantum gate that acts on a plurality of qubits, typically a two-input quantum gate that acts on two qubits. The multi-input quantum gate is, for example, a CNOT gate or a $ZX_{\pi/2}$ gate used to implement a CNOT gate.

The quantum computer to be calibrated according to the first embodiment uses a plurality of pulse signals when executing the multi-input quantum gate. The quantum computer emits a plurality of pulse signals to an individual qubit in parallel in the same period. In order to make a control bit and a target bit interact with each other, for example, the quantum computer uses a CR method. The quantum computer has a plurality of control parameters for controlling the plurality of pulse signals. Changing the values of the control parameters changes the waveforms of the pulse signals. Examples of the control parameters include the amplitude and the phase of a certain pulse signal, the amplitude and the phase of another pulse signal, and a pulse length common to the plurality of pulse signals.

The error function 13 approximates the relationship between the plurality of control parameters and the error. The error function 13 is predefined, for example, in terms of the relationship between an error component included in a Hamiltonian of the multi-input quantum gate, a unitary transformation expressing the Hamiltonian in the form of an action on a qubit, and the plurality of control parameters. The ideal value of the multi-input quantum gate is, for example, a unitary matrix indicating an ideal multi-input quantum gate with no error. The actual value of the multi-input quantum gate is, for example, a unitary matrix indicating the actual multi-input quantum gate with an error.

The error function 13 may estimate, as the error, the magnitude of the matrix difference between the ideal value and the actual value, or may estimate the quadratic norm of the matrix difference such as the Frobenius norm. The error function 13 may estimate a sum of squares of components included in the matrix difference. Further, the error function 13 may have a plurality of search parameters, which are mutually convertible with the plurality of control parameters. The plurality of search parameters may include Hamiltonian coefficients of the multi-input quantum gate. Because of the possibility of the mutual conversion, searching for an optimum solution of a search parameter on the error function 13 is equivalent to searching for an optimum solution of a control parameter.

The processing unit 12 determines the values of the plurality of control parameters such that the action of the multi-input quantum gate in a certain quantum computer is closest to an ideal effect. In the first embodiment, the processing unit 12 performs three-stage optimization as described below.

In the first stage, the processing unit 12 selects a first value for each of the plurality of control parameters, as initial values. For example, the processing unit 12 selects a value 14a for a control parameter 14 (control parameter t), selects a value 15a for a control parameter 15 (control parameter $\varepsilon_1$), and selects a value 16a for a control parameter 16 (control parameter $\varepsilon_2$). The control parameter 14 is, for example, a pulse length. The control parameter 15 is, for example, the amplitude of a first pulse signal. The control parameter 16 is, for example, the amplitude of a second pulse signal. In the second stage, the processing unit 12 uses the values in the first stage and the error function 13, to estimate values at which the accuracy of the multi-input quantum gate is higher than the accuracy obtained with the values in the first stage.

For example, the processing unit 12 updates the value 14a to a value 14b, updates the value 15a to a value 15b, and updates the value 16a to a value 16b. In the third stage, the processing unit 12 uses the values in the second stage and the actual calculation result of the quantum computer, to determine values at which the accuracy of the multi-input quantum gate is higher than the accuracy obtained with the values in the second stage. The values in the third stage may be the final calibration result to be set in the quantum computer. For example, the processing unit 12 updates the value 14b to a value 14c, updates the value 15b to a value 15c, and updates the value 16b to a value 16c.

In the first stage, the processing unit 12 selects a first value for each of the plurality of control parameters. In the first stage, the processing unit 12 does not need to take the mutual influence of the plurality of control parameters into account, and may independently select the values of the individual control parameters. The individual first value may be a predetermined value that are set in the quantum computer before calibration. In addition, the individual first value may be selected according to the value range of the corresponding control parameter, such as a center value of the corresponding control parameter. The individual first value may be selected based on knowledge, such as past calibration results of the same type of quantum computer.

The individual first value may be selected by a simple optimum value search using an output of a quantum computer. For example, the processing unit 12 selects one control parameter from a plurality of control parameters, and lists a plurality of candidate values for the selected control parameter. In addition, the processing unit 12 fixes the values of the other control parameters to predetermined values.

The processing unit 12 measures an error by causing the quantum computer to execute the multi-input quantum gate while changing the value of the selected control parameter. The processing unit 12 selects a value that minimizes the error among the plurality of candidate values, as the first value for the selected control parameter. The processing unit 12 executes the above-described processing for each of the plurality of control parameters in the first stage.

In the second stage, the processing unit 12 estimates a first error from the first values of the plurality of control parameters by using the error function 13. Next, the processing unit 12 searches for the second value for each of the plurality of control parameters by using the error function 13. The second values are values such that the second error estimated by the error function 13 is smaller than the first error. The first values in the first stage are used as the initial values in the second stage. In the second stage, the processing unit 12 performs an optimum value search on the model, and does not need to cause the quantum computer to execute the multi-input quantum gate.

For example, the processing unit 12 calculates the first error as the output of the error function 13 by inputting the first values of the plurality of control parameters to the error function 13. When the error function 13 has a plurality of search parameters, the processing unit 12 converts the first values of the plurality of control parameters into values of the plurality of search parameters. The value of at least one of the plurality of search parameters may be an estimate of the Hamiltonian coefficients of the multi-input quantum gate.

For example, the processing unit 12 updates the values of the plurality of control parameters or the plurality of search parameters by a gradient method. The processing unit 12 may repeatedly update the values of the plurality of control parameters or the plurality of search parameters until certain convergence conditions are satisfied. The processing unit 12 may determine the amount of one update from the gradient of the error function 13 with respect to the control parameters or the search parameters and from the regularization term having a weight that varies based on the error. The optimum value search in the second stage may be referred to as nonlinear continuous optimization. When the error function 13 has a plurality of search parameters, the processing unit 12 sets the values of the plurality of search parameters after the convergence back to the values of the plurality of control parameters.

In the third stage, the processing unit 12 sets the second values to the plurality of control parameters and causes the quantum computer to execute the multi-input quantum gate. The processing unit 12 acquires the execution result of the multi-input quantum gate from the quantum computer, and determines a third value to be set to each of the plurality of control parameters by using the execution result. The second values in the second stage are used as the initial values in the third stage. Typically, the third values are values such that the error included in the output of the quantum computer is less than the error obtained with the second values.

In the third stage, the mutual influence of the plurality of control parameters is also taken into account. The processing unit 12 may repeat the update of the values of the plurality of control parameters and the experiment using the quantum computer until certain convergence conditions are satisfied. The optimal value search in the third stage may be ORBIT. The processing unit 12 may determine the update amount of each of the plurality of control parameters by using a search algorithm such as the Nelder-Mead method. The optimal value search in the third stage may be black box optimization that does not depend on the type of the multi-input quantum gate or the implementation method of the multi-input quantum gate.

The processing unit 12 outputs the values of the plurality of control parameters. The processing unit 12 may store the values of the plurality of control parameters in a non-volatile storage, display the values on a display device, or transmit the values to another information processing apparatus. Further, the processing unit 12 may set the values determined in the first embodiment to a plurality of control parameters of the quantum computer.

As described above, the information processing apparatus 10 according to the first embodiment selects a first value for each of a plurality of control parameters for controlling a plurality of pulse signals used by the quantum computer in executing a multi-input quantum gate. The information processing apparatus 10 estimates a first error from the first values by using the error function 13 that estimates the error between an ideal value and an actual value of the multi-input quantum gate from the values of the plurality of control parameters. The information processing apparatus 10 uses the error function 13 to search for a second value for each of the plurality of control parameters such that a second error estimated from the second values is smaller than the first error. The information processing apparatus 10 acquires, from the quantum computer, a result obtained by executing the multi-input quantum gate using the second values, and determines a third value to be set to each of the plurality of control parameters by using the result.

In this way, the information processing apparatus 10 is able to efficiently optimize a plurality of control parameters of a quantum computer, and is able to efficiently calibrate multi-input quantum gates. In particular, the calibration method of the first embodiment is suitable for multi-input quantum gates implemented by the microwave pulse method and the CR method, and is suitable when there are many control parameters.

Further, the information processing apparatus 10 performs model-based optimization with a relatively low calculation load before black-box optimization with a high calculation load. This gives initial values close to optimal values at the start of the black box optimization. As a result, the calculation load of the black-box optimization is reduced, and the optimization accuracy is improved. Further, the information processing apparatus 10 is able to cover the limit of the optimization accuracy due to the presence of the model error between the actual multi-input quantum gate and the model by executing the black-box optimization.

In addition, the information processing apparatus 10 collectively searches for optimum values of a plurality of control parameters in model-based optimization. Therefore, as compared with a method in which the optimum value of an individual control parameter is independently searched while the values of the other control parameters are fixed, the mutual influence of the plurality of control parameters is taken into account, and the optimization accuracy is improved. The information processing apparatus 10 is also able to sequentially execute the first stage of selecting the initial values of the individual control parameters, the second stage of the model-based optimization, and the third stage of the black-box optimization. In this way, the information processing apparatus 10 is able to achieve both improvement in optimization accuracy and reduction in calculation load.

(b) Second Embodiment

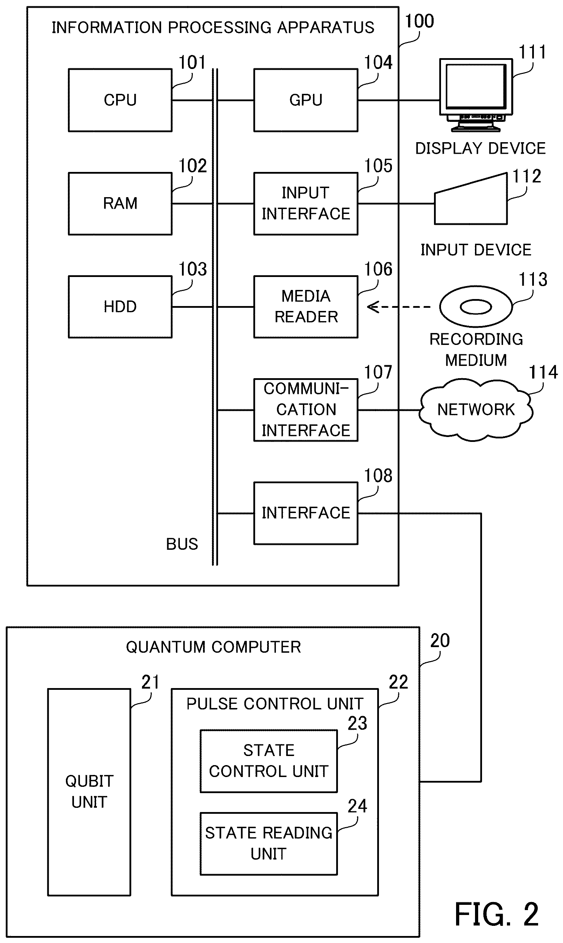

FIG. 2 is a diagram illustrating an example of hardware of an information processing system according to a second embodiment. The information processing system according to the second embodiment includes an information processing apparatus 100 and a quantum computer 20. The information processing apparatus 100 is a von Neumann classical computer. The information processing apparatus 100 calibrates a quantum gate implemented in the quantum computer 20. The information processing apparatus 100 corresponds to the information processing apparatus 10 of the first embodiment.

The information processing apparatus 100 includes a CPU 101, a RAM 102, an HDD 103, a GPU 104, an input interface 105, a media reader 106, a communication interface 107, and an interface 108. The CPU 101 corresponds to the processing unit 12 of the first embodiment. The RAM 102 or the HDD 103 corresponds to the storage unit 11 of the first embodiment.

The CPU 101 is a processor that executes instructions of a program. The CPU 101 loads a program and data from the HDD 103 into the RAM 102 and executes the program. The information processing apparatus 100 may include a plurality of processors.

The RAM 102 is a volatile semiconductor memory that temporarily stores a program executed by the CPU 101 and data used for calculation by the CPU 101. The information processing apparatus 100 may include a volatile memory of a type other than the RAM.

The HDD 103 is a non-volatile storage that stores software programs such as an operating system, middleware, and application software, and other data. The information processing apparatus 100 may include another type of non-volatile storage such as an SSD or a flash memory.

The GPU 104 performs image processing in cooperation with the CPU 101, and outputs an image to a display device 111 connected to the information processing apparatus 100. The display device 111 is, for example, a cathode ray tube (CRT) display, a liquid crystal display, an organic electro luminescence (EL) display, or a projector. The GPU 104 may be used as a general-purpose computing on graphics processing unit (GPGPU). The GPU 104 is able to execute a program in accordance with an instruction from the CPU 101. The information processing apparatus 100 may include a volatile semiconductor memory other than the RAM 102 as a GPU memory.

The input interface 105 receives an input signal from an input device 112 connected to the information processing apparatus 100. The input device 112 is, for example, a mouse, a touch panel, or a keyboard. A plurality of input devices may be connected to the information processing apparatus 100.

The media reader 106 is a reading device that reads a program and data recorded in a recording medium 113. The recording medium 113 is, for example, a magnetic disk, an optical disc, or a semiconductor memory. Examples of the magnetic disk include a flexible disk (FD) and an HDD. Examples of the optical disc include a compact disc (CD) and a digital versatile disc (DVD). The media reader 106 copies the program and data read from the recording medium 113 to another recording medium such as the RAM 102 or the HDD 103. The read program may be executed by the CPU 101.

The recording medium 113 may be a portable recording medium. The recording medium 113 may be used for distribution of programs and data. The recording medium 113 and the HDD 103 may be referred to as a computer-readable recording medium.

The communication interface 107 communicates with other information processing apparatuses via a network 114. The communication interface 107 may be a wired communication interface connected to a wired communication device such as a switch or a router, or may be a wireless communication interface connected to a wireless communication device such as a base station or an access point.

The interface 108 is connected to the quantum computer 20. The interface 108 transmits a command to the quantum computer 20 in response to an instruction from the CPU 101. The interface 108 receives the execution result of the command from the quantum computer 20 and stores the received execution result in the RAM 102.

The quantum computer 20 includes a qubit unit 21 and a pulse control unit 22. The qubit unit 21 includes a plurality of qubits. The individual qubit is, for example, a superconducting qubit. The plurality of qubits are arranged, for example, in a grid pattern. When a microwave pulse signal is emitted to a qubit, the quantum state of the qubit changes. A pair of qubits capable of operating a two-input quantum gate are connected by a capacitor.

The pulse control unit 22 performs quantum computation by emitting a microwave pulse signal to the qubit unit 21. The pulse control unit 22 includes a state control unit 23 and a state reading unit 24. The state control unit 23 emits a microwave pulse signal to the qubit unit 21 in accordance with a command from the information processing apparatus 100. A quantum operation corresponding to a quantum gate is consequently executed. The state control unit 23 may emit a plurality of microwave pulse signals in combination in order to implement one quantum gate.

The state control unit 23 has a plurality of control parameters for adjusting the waveform of a microwave pulse signal. For example, the state control unit 23 has control parameters such as the pulse length, the amplitude, and the phase of a microwave pulse signal. Each of these control parameters has a predetermined value. The state control unit 23 changes the control parameter values from the predetermined values in response to a command from the information processing apparatus 100. Two-input quantum gates are implemented by the CR method. In the CR method, a microwave pulse signal having a resonance frequency that resonates with a target bit is emitted to a control bit.

The state reading unit 24 performs a measurement operation on an individual qubit included in the qubit unit 21 in response to a command from the information processing apparatus 100. By one measurement operation on a qubit, 0 or 1 is stochastically acquired as a measurement value depending on the quantum state of the qubit. The state reading unit 24 transmits the measurement value to the information processing apparatus 100. Next, a qubit and a quantum gate will be described.

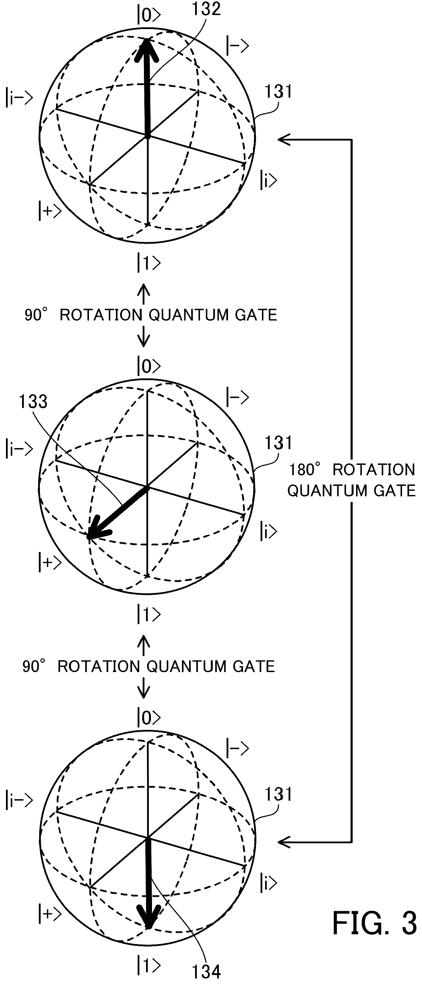

FIG. 3 is a diagram illustrating an operation example of a quantum state by a quantum gate. In the quantum computer 20, the quantum state of one qubit is expressed as a superposition of |0> and |1> as expressed by Equation (1). In Equation (1), "a" is a complex number indicating the weight of |0>, and "b" is a complex number indicating the weight of |1>. The square of the absolute value of "a" represents the existence probability of |0>, and the square of the absolute value of "b" represents the existence probability of |1>. The sum of the square of the absolute value of "a" and the square of the absolute value of "b" is 1. Taking the range of possible values of "a" and "b" into account, the quantum state may be expressed by using angles $\theta$ and $\varphi$ as expressed by Equation (1). $\theta$ is a real number of 0 or more and $\pi$ or less, and $\varphi$ is a real number of 0 or more and $2\pi$ or less.

$$|\psi\rangle = a|0\rangle + b|1\rangle = \cos(\theta/2)|0\rangle + \exp(i\phi)\sin(\theta/2)|1\rangle \qquad (1)$$

A Bloch sphere 131 three-dimensionally expresses the space to which the quantum state of one qubit belongs. One Bloch vector from the origin of the Bloch sphere 131 to a point on the surface of the Bloch sphere 131 represents one quantum state. A Bloch vector 132 represents |0> and corresponds to $\theta = 0$ and $\varphi = 0$. A Bloch vector 133 represents the quantum state of Equation (2) and corresponds to $\theta = \pi/2$ and $\varphi = 0$. A Bloch vector 134 represents |1> and corresponds to $\theta$ = n and $\varphi$ = 0.

$$\frac{1}{\sqrt{2}}|0\rangle + \frac{1}{\sqrt{2}}|1\rangle \qquad (2)$$

For the conversion between the Bloch vector 132 and the Bloch vector 133, a 90° rotation quantum gate as expressed by Equation (3) is used. Similarly, a 90° rotation quantum gate is used for the conversion between the Bloch vector 133 and the Bloch vector 134. The quantum gate of Equation (3) rotates the Bloch vector by $\pi/2$ around the Y-axis. A 180° rotation quantum gate is used for the conversion between the Bloch vector 132 and the Bloch vector 134. This 180° rotation quantum gate is, for example, the X gate among the X gate, the Y gate, and the Z gate of Equation (4) expressed by a Pauli matrix.

$$R_y(\pi/2) = \frac{1}{\sqrt{2}} \begin{bmatrix} 1 & -1 \\ 1 & 1 \end{bmatrix} \qquad (3)$$

$$X = \begin{bmatrix} 0 & 1 \\ 1 & 0 \end{bmatrix}, \ Y = \begin{bmatrix} 0 & -i \\ i & 0 \end{bmatrix}, \ Z = \begin{bmatrix} 1 & 0 \\ 0 & -1 \end{bmatrix} \qquad (4)$$

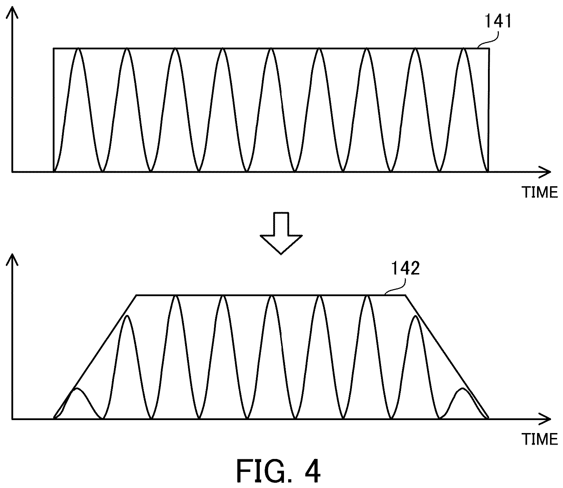

FIG. 4 is a diagram illustrating examples of a microwave pulse signal. One physical implementation of a quantum gate is a microwave pulse. The quantum computer 20 emits a microwave pulse signal to a qubit whose quantum state is to be changed. The total area of the waveform of the microwave pulse signal corresponds to the total energy given to the qubit, and corresponds to the rotation amount of the quantum state. A desired quantum gate is realized by adjusting the waveform of the microwave pulse signal.

The Hamiltonian of the microwave pulse signal is defined as expressed by Equation (5). The Hamiltonian is the energy that changes the quantum state. In Equation (5), H is the Hamiltonian, h is the Dirac constant, and $\Omega$ is the Rabi frequency. X is a unitary matrix corresponding to a desired quantum gate, and is a Pauli X matrix in this case. The effect of a quantum gate on a qubit is represented by the unitary transformation expressed by Equation (6). In Equation (6), U is a unitary matrix. The second equation modification holds when $\Omega t = \pi$.

$$H = \hbar \Omega X \qquad (5)$$

$$U = \exp(-iHt/\hbar) = X \quad \text{when} \quad \Omega t = \pi \qquad (6)$$

Ideally, it is preferable that the quantum computer 20 emit a microwave pulse signal 141 having a rectangular envelope to a qubit. As a result, the effect of the quantum gate represents an ideal value as expressed by Equation (6). However, it is difficult for the quantum computer 20 to generate the microwave pulse signal 141 due to physical limitations. In reality, the quantum computer 20 generates a microwave pulse signal 142 having gradually sloping rising and falling edges. As a result, the quantum gate has an error indicating the extent to which its effect deviates from an ideal value.

The error of the quantum gate is affected by the manufacturing variations of the quantum computer 20, and is also affected by the use environment of the quantum computer 20. Therefore, the quantum computer 20 has control parameters for adjusting the waveform of a microwave pulse signal such that the error of the quantum gate is reduced. For example, the quantum computer 20 has control parameters such as the pulse length, the amplitude, the frequency, and the phase of a microwave pulse signal. The pulse length is the time width of the envelope of the microwave pulse signal. The phase is the angle of the microwave at the start of emission.

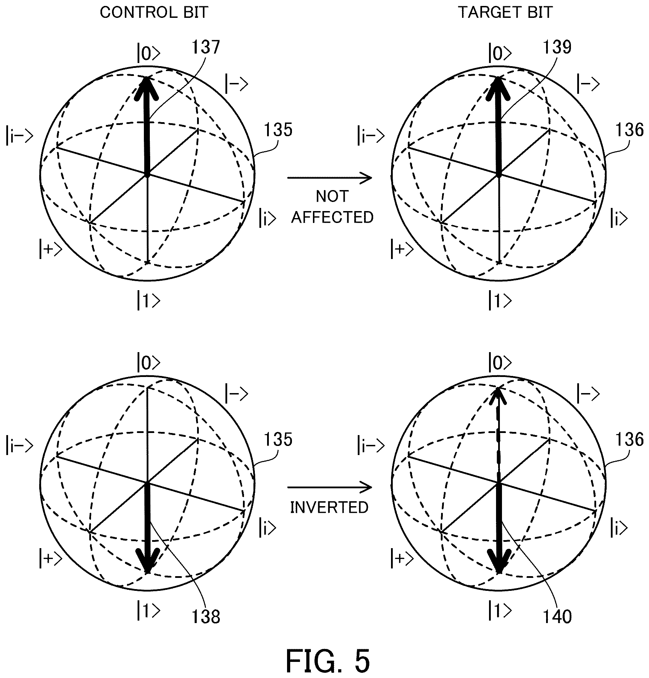

FIG. 5 is a diagram illustrating an operation example of a quantum state by a two-input quantum gate. Examples of the quantum gates implemented by quantum computers include a two-input quantum gate that acts on two qubits. A typical example of the two-input quantum gate is a CNOT gate.

A Bloch sphere 135 represents the space of the quantum state of a control bit. A Bloch sphere 136 indicates the space of the quantum state of a target bit. A CNOT gate maintains the quantum state of the target bit when the control bit is 0, and inverts 0 and 1 of the target bit when the control bit is 1. A Bloch vector 137 indicates a case where the control bit is 0. In this case, a Bloch vector 139 of the target bit does not change. On the other hand, a Bloch vector 138 indicates a case where the control bit is 1. In this case, the Bloch vector 139 of the target bit is rotated by 180° and changed to a Bloch vector 140.

The quantum computer 20 uses a CR method (cross resonance method) as a physical implementation of a two-input quantum gate. The CR method controls a target bit in accordance with the quantum state of a control bit via capacitive coupling between the control bit and the target bit. In the CR method, a microwave pulse signal having a resonance frequency that resonates with a target bit is input to a signal line of a control bit.

By using the CR method, a two-input quantum gate called a ZX gate is realized. The ZX gate causes the Z gate to act on the control bit and causes the X gate to act on the target bit. Equation (7) represents a $ZX_{\pi/2}$ gate corresponding to the $\pi/2$ pulse of the ZX gate. The two-input quantum gate is represented by a $4\times4$ unitary matrix. By combining the $ZX_{\pi/2}$ gate with several other quantum gates, a CNOT gate is realized.

$$ZX_{\pi/2} = \frac{1}{\sqrt{2}} \begin{bmatrix} 1 & -i & 0 & 0 \\ -i & 1 & 0 & 0 \\ 0 & 0 & 1 & i \\ 0 & 0 & i & 1 \end{bmatrix} \qquad (7)$$

In the second embodiment, a $ZX_{\pi/2}$ gate is realized as a two-input quantum gate by using a microwave pulse signal and a CR method. Note that the information processing apparatus 100 may use the calibration method of the second embodiment for other types of two-input quantum gates or for multi-input quantum gates that act on three or more qubits.

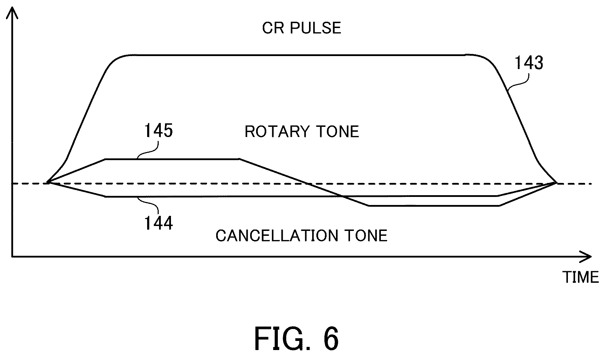

FIG. 6 is a diagram illustrating an example of a combination of a plurality of microwave pulse signals. A two-input quantum gate may produce components in different rotational directions and may have complex error components, and its effect is represented by a $4\times4$ matrix. Therefore, it may be difficult for the quantum computer 20 to realize a desired two-input quantum gate with high accuracy only by adjusting the waveform of a single microwave pulse signal. Therefore, the quantum computer 20 combines a plurality of microwave pulse signals to realize a two-input quantum gate.

As an example, the quantum computer 20 combines microwave pulse signals 143, 144, and 145 to realize a $ZX_{\pi/2}$ gate. The microwave pulse signal 143 is a CR pulse as a main microwave pulse signal. The CR pulse generates the above-described cross-resonance between a control bit and a target bit.

The microwave pulse signal 144 is a cancellation tone. The cancellation tone is intended to cancel an error component in a specific rotation direction in the CR pulse. The microwave pulse signal 145 is a rotary tone. The rotary tone is a microwave pulse signal rotating in a certain rotation direction (for example, the X-axis direction), and is intended to remove an error component in a direction different from the certain rotation direction.

By combining a plurality of microwave pulse signals in this way, the implementation accuracy of the quantum gates is improved. However, the quantum computer 20 has many control parameters in order to adjust the waveforms of the plurality of microwave pulse signals. For example, the quantum computer 20 has control parameters such as the overall pulse length, the amplitude and the phase of the CR pulse, the amplitude and the phase of the cancellation tone, and the amplitude of the rotary tone.

Since there are many control parameters, the search space to which a combination of control parameter values belongs becomes wide. Therefore, when searching for an optimal solution that minimizes the error of a quantum gate, the load on the information processing apparatus 100 may increase and the search time may become long. In addition, depending on the search method, the calibration accuracy may decrease. Therefore, the information processing apparatus 100 according to the second embodiment efficiently calibrates the quantum gate through three-stage optimization processing described below.

In the first stage, the information processing apparatus 100 selects an initial value independently for each control parameter through Hamiltonian tomography. Hamiltonian tomography is a type of quantum process tomography that estimates the actual effect of a quantum gate.

The information processing apparatus 100 repeatedly causes the quantum computer 20 to execute the quantum gate under a certain control parameter value and to acquire the measurement values of the qubit. The information processing apparatus 100 estimates an individual Hamiltonian coefficient of the quantum gate by statistically analyzing the measurement values, and calculates an error component, which is the difference between an actual value and an ideal value of the Hamiltonian coefficient. The information processing apparatus 100 samples several control parameter values, performs Hamiltonian tomography with the control parameter values, and obtains a control parameter value achieving a minimum error component.

At this time, since the search space formed by the plurality of control parameters is wide, the information processing apparatus 100 changes only the value of one of the control parameters, instead of simultaneously changing the values of the plurality of control parameters. While repeatedly estimating the error component of the Hamiltonian while changing the value of one control parameter, the information processing apparatus 100 fixes the values of the other control parameters to predetermined values. The information processing apparatus 100 selects, as the initial value of the one control parameter, the control parameter value achieving the minimum estimated error component among the tried control parameter values. For example, the information processing apparatus 100 selects 20 candidate values for each of the six control parameters, executes the quantum gate 1000 times for each candidate value, and estimates the error component.

Since the dependence relationship among the plurality of control parameters is not taken into account in the first stage, the initial values selected in the first stage may be far from optimum values. In addition, there may be an error component that is difficult to set to zero as a whole, and the initial values selected by individually varying the values of the plurality of control parameters are not always optimum values. Therefore, the first stage is a simple search method for obtaining initial values for the optimization process in the second stage.

In the second stage, the information processing apparatus 100 executes model-based optimization. The model-based optimization uses a model that defines the relationship between the plurality of control parameters and the error, instead of causing the quantum computer 20 to actually execute the quantum gate. The error calculated by the model is the magnitude of the difference between an actual value and an ideal value of a unitary matrix indicating the effect of the quantum gate. However, in order to facilitate the parameter search on the model, the model of the second embodiment uses a plurality of search parameters that are mutually convertible with a plurality of control parameters. The model expressed by using these search parameters has versatility independent of the type of the quantum gate and has versatility independent of the detailed configuration of the microwave pulse signals.

The information processing apparatus 100 repeatedly updates the values of the plurality of search parameters by the gradient method until convergence. The information processing apparatus 100 calculates the error from the value of the current search parameters by using the model, and calculates the gradient of the error with respect to the search parameters. The information processing apparatus 100 updates the search parameter values in a direction in which the error decreases using the calculated gradient. The information processing apparatus 100 converts the initial values of the plurality of control parameters selected in the first stage into initial values of a plurality of search parameters, and starts a search by the gradient method with the initial values. The information processing apparatus 100 converts the values of the plurality of search parameters at the time of the convergence into the values of the plurality of control parameters.

The model in the second stage takes the dependency among the control parameters into account. However, the model does not always accurately represent all errors of the implementation of the quantum gate, and the error calculated by the model is an estimate. Thus, although the control parameter values in the second stage are close to optimum values than those in the first stage, these control parameter values may still deviate from optimum values. Therefore, the control parameter values in the second stage are used as the initial values for the optimization process in the third stage.

In the third stage, the information processing apparatus 100 executes ORBIT, which is a type of black box optimization. The information processing apparatus 100 causes the quantum computer 20 to continuously execute a quantum gate m times (m is an integer of 1 or more) and further execute a quantum gate that cancels an ideal effect of the quantum gate executed m times. The information processing apparatus 100 measures the qubit and determines whether the residual is zero. The information processing apparatus 100 calculates the success probability that the residual is zero by repeating the above, and calculates the fidelity corresponding to the number m of iterations from the success probability. The fidelity is an index representing the accuracy of the quantum operation and is a real number of 0 or more and 1 or less.

The information processing apparatus 100 repeats the measurement of the fidelity while changing the number m of iterations, and fits a nonlinear curve indicating the relationship between the number m of iterations and the fidelity. The information processing apparatus 100 estimates the fidelity per quantum gate from the nonlinear curve. Accordingly, even when the error of the quantum gate is small, the degree of the error is evaluated with high accuracy. The information processing apparatus 100 updates the values of the plurality of control parameters by using a search algorithm such as the Nelder-Mead method, such that the fidelity per quantum gate is increased.

ORBIT is a black-box optimization that makes no assumptions about the quantum gate implementation method. ORBIT is for searching for optimum values from the entire search space formed by a plurality of control parameters, and takes the dependency among the plurality of control parameters into account. Therefore, the information processing apparatus 100 adopts the individual control parameter value calculated by ORBIT as the final calibration result. On the other hand, the cost of measuring the fidelity once is high, and the number of steps until the fidelity converges may be increased. Therefore, the load of ORBIT is high.

Therefore, the information processing apparatus 100 reduces the number of steps until the fidelity converges by executing ORBIT, starting with control parameter values close to optimum values. This reduces the calculation load of ORBIT and shortens the time needed for ORBIT. Next, the model-based optimization in the second stage will be further described.

In defining the model, the information processing apparatus 100 defines the Hamiltonian of the quantum gate as the sum of a plurality of rotational components as expressed by Equation (8). In Equation (8), IX is the tensor product of an X gate and an identity gate (I gate), IY is the tensor product of a Y gate and the I gate, and IZ is the tensor product of a Z gate and the I gate. ZI is the tensor product of the I gate and the Z gate, ZX is the tensor product of the X gate and the Z gate, ZY is the tensor product of the Y gate and the Z gate, and ZZ is the tensor product of the Z gate and the Z gate.

$$
\begin{aligned}
H_\pm = (\nu_{IX} \pm f)IX &+ \nu_{IY}IY + \nu_{IZ}IZ \\
&+ \nu_{ZI}ZI + \nu_{ZX}ZX + \nu_{ZY}ZY + \nu_{ZZ}ZZ
\end{aligned}
\qquad (8)
$$

$\nu_{IX}$ is the coefficient of a portion, excluding the influence of the rotary tone in the IX component. f is the amplitude of the rotary tone. $\nu_{IY}$ is the coefficient of the IY component, $\nu_{IZ}$ is the coefficient of the IZ component, $\nu_{ZI}$ is the coefficient of the ZI component, $\nu_{ZX}$ is the coefficient of the ZX component, $\nu_{ZY}$ is the coefficient of the ZY component, and $\nu_{ZI}$ is the coefficient of the ZZ component. The Hamiltonian is expressed by a 4×4 matrix and includes components other than the above-described seven components. However, since the above seven components are dominant, components other than the above seven components are ignored in the model of the second embodiment. In the Hamiltonian tomography in the first stage, some or all of the Hamiltonian coefficients are estimated.

From the Hamiltonian of the quantum gate indicating an error, a unitary transformation representing the effect indicating the error is defined by the transformation expressed by Equation (9). In Equation (9), U is a unitary matrix representing unitary transformation, and t is the pulse length of a microwave pulse signal. Due to the effect of the error, the unitary matrix U does not match the ideal value of the quantum gate.

$$
U = \exp(-iH_-t/2)\exp(-iH_+t/2) \qquad (9)
$$

Therefore, the information processing apparatus 100 defines an error function expressed by Equation (10) as a model. The error function has Hamiltonian coefficients $\nu_{IX}$, $\nu_{IY}$, $\nu_{ZX}$, and $\nu_{ZY}$, a rotary tone amplitude f, and a pulse length t as search parameters. The error function calculates an error from the values of these six search parameters. The error is a sum of squares of matrix components included in the matrix difference between a unitary matrix indicating an actual value of the quantum gate and a unitary matrix indicating an ideal value of the quantum gate.

$$
E(\nu_{IX}, \nu_{IY}, \nu_{ZX}, \nu_{ZY}, f, t) = \mathrm{tr}\left[(U - ZX_{\pi/2})^\dagger(U - ZX_{\pi/2})\right] \qquad (10)
$$

In Equation (10), a $ZX_{\pi/2}$ gate is used as the quantum gate. The error calculated by the error function corresponds to the square of the Frobenius norm. The information processing apparatus 100 may use a distance index other than the Frobenius norm as the error index.

The relationship between the Hamiltonian coefficients and the control parameters included in Equation (8) is as follows. Equation (11) represents the relationship between the Hamiltonian coefficient $\nu_{IX}$ and control parameters $\varepsilon_{CR}$, $\varphi_{CR}$, $\varepsilon_C$, and $\varphi_C$. $\varepsilon_{CR}$ is the amplitude of the CR pulse, $\varphi_{CR}$ is the phase of the CR pulse, $\varepsilon_C$ is the amplitude of the cancellation tone, and $\varphi_C$ is the phase of the cancellation tone. The information processing apparatus 100 is able to determine constants $A_1$, $A_2$, and $a_1$ by estimating the actual Hamiltonian coefficients by the Hamiltonian tomography in the

first stage.

$$\nu_{IX} = A_1 \varepsilon_{CR} \cos(\phi_{CR} - a_1) + A_2 \varepsilon_C \cos \phi_C \qquad (11)$$

Equation (12) represents the relationship between the Hamiltonian coefficient $\nu_{IY}$ and the control parameters $\varepsilon_{CR}$, $\varphi_{CR}$, $\varepsilon_C$, and $\varphi_C$. Equation (13) indicates that the Hamiltonian coefficient $\nu_{IZ}$ is a constant. The information processing apparatus 100 is able to determine a constant $A_3$ by estimating the actual Hamiltonian coefficients by the Hamiltonian tomography in the first stage. Equation (14) represents the relationship between the Hamiltonian coefficient $\nu_{ZI}$ and the control parameter $\varepsilon_{CR}$. The information processing apparatus 100 is able to determine a constant $A_4$ by estimating the actual Hamiltonian coefficients by the Hamiltonian tomography in the first stage.

$$\nu_{IY} = A_1 \varepsilon_{CR} \sin(\phi_{CR} - a_1) + A_2 \varepsilon_C \sin \phi_C \qquad (12)$$

$$\nu_{IZ} = A_3 \qquad (13)$$

$$\nu_{ZI} = -A_4 \varepsilon_{CR}^2 \qquad (14)$$

Equation (15) represents the relationship between the Hamiltonian coefficient $\nu_{ZX}$ and the control parameters $\varepsilon_{cR}$ and $\varphi_{CR}$. The information processing apparatus 100 is able to determine a constant $A_5$ by estimating the actual Hamiltonian coefficients by the Hamiltonian tomography in the first stage. Equation (16) represents the relationship between the Hamiltonian coefficient $\nu_{ZY}$ and the control parameters $\varepsilon_{CR}$ and $\varphi_{CR}$. Equation (17) indicates that the Hamiltonian coefficient $\nu_{ZZ}$ is a constant. The information processing apparatus 100 is able to determine a constant $A_6$ by estimating the actual Hamiltonian coefficients by the Hamiltonian tomography in the first stage.

$$\nu_{ZX} = A_5 \varepsilon_{CR} \cos(\phi_{CR} - a_2) \qquad (15)$$

$$\nu_{ZY} = A_5 \varepsilon_{CR} \sin(\phi_{CR} - a_2) \qquad (16)$$

$$\nu_{ZZ} = A_6 \qquad (17)$$

The error function in Equation (10) is expressed using a vector $e_s$ as expressed by Equation (18). Defining the error function in the form of the sum of squares of an equation including variables facilitates numerical calculation using a search algorithm of a gradient method. The vector $e_s$ is expanded as expressed by Equation (19). In Equation (19), vectors $n_w$, $n_x$, $n_y$, and $n_z$ are four-dimensional unit vectors. $n_w$ is a vector in which only the w dimension is 1 and the other dimensions are 0. $n_x$ is a vector in which only the x dimension is 1 and the other dimensions are 0. $n_y$ is a vector in which only the y dimension is 1 and the other dimensions are 0. $n_z$ is a vector in which only the z dimension is 1 and the other dimensions are 0.

$$E(\nu_{IX}, \nu_{IY}, \nu_{ZX}, \nu_{ZY}, f, t) = 2 \sum_{s=\pm 1} |e_s|^2 \qquad (18)$$

$$e_s = \left\{ \cos\theta_+ \cos\theta_- - \frac{\theta^2 - f^2}{\theta_+ \theta_-} \sin\theta_+ \sin\theta_- - \frac{1+s}{\sqrt{2}} \exp(is\nu_{ZI}t) \right\} \boldsymbol{n}_w$$

$$+ \left\{ \frac{\theta_x + f}{\theta_+} \sin\theta_+ \cos\theta_- + \frac{\theta_x - f}{\theta_-} \cos\theta_+ \sin\theta_- - \frac{1-s}{\sqrt{2}} \exp(is\nu_{ZI}t) \right\} \boldsymbol{n}_x$$

$$+ \left\{ \frac{\theta_y}{\theta_+} \sin\theta_+ \cos\theta_- + \frac{\theta_y}{\theta_-} \cos\theta_+ \sin\theta_- + \frac{2f\theta_z}{\theta_+ \theta_-} \sin\theta_+ \sin\theta_- \right\} \boldsymbol{n}_y$$

$$+ \left\{ \frac{\theta_z}{\theta_+} \sin\theta_+ \cos\theta_- + \frac{\theta_z}{\theta_-} \cos\theta_+ \sin\theta_- + \frac{2f\theta_y}{\theta_+ \theta_-} \sin\theta_+ \sin\theta_- \right\} \boldsymbol{n}_z \quad (19)$$

The Hamiltonian coefficient $\nu_{ZI}$ included in Equation (19) is estimated by, for example, the Hamiltonian tomography in the first stage. In Equation (19), $\theta$ is the absolute value of the vector $\theta(s)$ defined in Equations (20) and (21). $\theta_+$ is the absolute value of the vector $\theta_+(s, 0)$, and $\theta_-$ is the absolute value of the vector $\theta_-(s, 0)$. $\theta_x$ is the x component of the vector $\theta(s)$, $\theta_y$ is the y component of the vector $\theta(s)$, and $\theta_z$ is the z component of the vector $\theta(s)$. The Hamiltonian coefficients $\nu_{IZ}$ and $\nu_{ZZ}$ included in Equation (21) are estimated by, for example, the Hamiltonian tomography in the first stage.

$$\boldsymbol{\theta}(s) = \boldsymbol{\theta}_\pm(s, 0) \qquad\qquad (20)$$

$$2\boldsymbol{\theta}_\pm(s, f)/t = (\nu_{IX} + s\nu_{ZX} \pm f)\boldsymbol{n}_x$$
$$+ (\nu_{IY} + s\nu_{ZY})\boldsymbol{n}_y + (\nu_{IZ} + s\nu_{ZZ})\boldsymbol{n}_z \qquad (21)$$

When Equation (18) is expanded using Equation (19), the error function is defined as Equation (22). The information processing apparatus 100 enters the current values of the search parameters to the error function, to calculate an error corresponding to the current values. The information processing apparatus 100 calculates the update amount of the individual search parameter from the gradient of the error by using the parameter update formula expressed by Equation (23). This parameter update formula represents the Levenberg-Marquardt method. The Levenberg-Marquardt method is a kind of iterative method for solving a nonlinear least square problem.

$$E\left(\nu_{IX}, \nu_{IY}, \nu_{ZX}, \nu_{ZY}, f, t\right)$$

$$= 2 \sum_{s=\pm 1} \left[ \left\{ \cos\theta_+ \cos\theta_- - \frac{\theta^2 - f^2}{\theta_+ \theta_-} \sin\theta_+ \sin\theta_- - \frac{1+s}{\sqrt{2}} \exp(is\nu_{ZI}t) \right\}^2 \right.$$

$$+ \left\{ \frac{\theta_x + f}{\theta_+} \sin\theta_+ \cos\theta_- + \frac{\theta_x - f}{\theta_-} \cos\theta_+ \sin\theta_- - \frac{1-s}{\sqrt{2}} \exp(is\nu_{ZI}t) \right\}^2 \quad (22)$$

$$+ (\theta_y^2 + \theta_z^2) \left\{ \left( \frac{\sin\theta_+ \cos\theta_-}{\theta_+} + \frac{\cos\theta_+ \sin\theta_-}{\theta_-} \right)^2 + \left( \frac{2f}{\theta_+ \theta_-} \sin\theta_+ \sin\theta_- \right)^2 \right\} \right]$$

$$\sum_j \left( \sum_s \frac{\partial \boldsymbol{e}_s}{\partial p_i} \cdot \frac{\partial \boldsymbol{e}_s}{\partial p_j} + \lambda\delta_{ij} \right) \Delta p_j = -\sum_s \frac{\partial \boldsymbol{e}_s}{\partial p_i} \cdot \boldsymbol{e}_s \qquad (23)$$

In Equation (23), $p_i$ and $p_j$ represent any search parameter among the six search parameters as expressed by Equation (24). $\Delta p_j$ is an update amount of the search parameter $p_j$. The information processing apparatus 100 calculates an update amount satisfying Equation (23) for each of the six search parameters and adds the update amounts to the current values of the corresponding search parameters. The information processing apparatus 100 repeats the calculation of the error and the update of the search parameter values until the convergence conditions is satisfied.

$$p_i, p_j \in \{\nu_{IX}, \nu_{IY}, \nu_{ZX}, \nu_{ZY}, f, t\} \qquad (24)$$

In Equation (23), $\lambda\delta_{ij}$ is a regularization term. By inserting the regularization term into the parameter update formula, the information processing apparatus 100 suppresses the amount of update of the individual search parameter at one time from becoming too large. $\lambda$ is a weight of the regularization term, and is dynamically adjusted according to a decrease state of the error calculated by the error function, as will be described later. $\delta_{ij}$ is the Kronecker delta. If the search parameters $p_i$ and $p_j$ are the same, $\delta_{ij} = 1$, and if they are not the same, $\delta_{ij} = 0$.

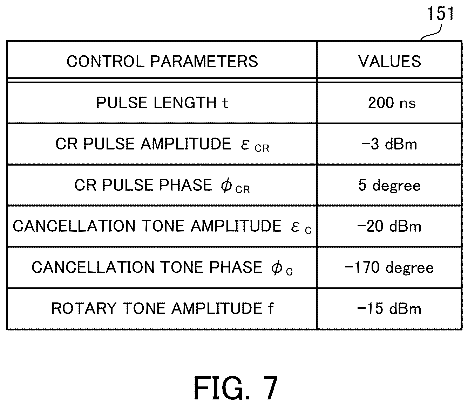

FIG. 7 is a diagram illustrating an example of the control parameters. In a table 151, the control parameters of the quantum computer 20 are associated with their values. As an example, the pulse length t is 200 ns, the CR pulse amplitude $\varepsilon_{CR}$ is -3 dBm, the CR pulse phase $\varphi_{CR}$ is 5°, the cancellation tone amplitude $\varepsilon_C$ is -20 dBm, the cancellation tone phase $\varphi_C$ is -170°, and the rotary tone amplitude f is -15 dBm.

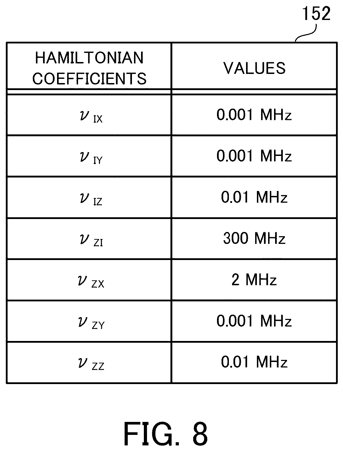

FIG. 8 is a diagram illustrating an example of the Hamiltonian coefficients. In a table 152, the Hamiltonian coefficients of a quantum gate are associated with their values. As an example, $\nu_{IX}$ is 0.001 MHz, $\nu_{IY}$ is 0.001 MHz, $\nu_{IZ}$ is 0.01 MHz, $\nu_{ZI}$ is 300 MHz, $\nu_{ZX}$ is 2 MHz, $\nu_{ZY}$ is 0.001 MHz, and $\nu_{ZZ}$ is 0.01 MHz. Next, a supplementary description will be given of the first stage and the optimization process in the third stage.

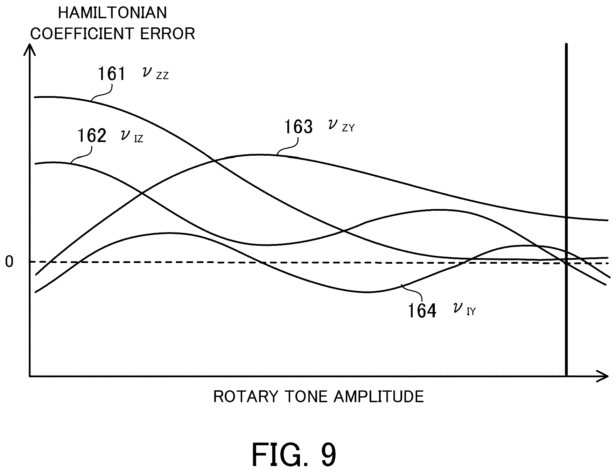

FIG. 9 is a graph illustrating an example of the relationship between the rotary tone amplitude and the error. In the graph in FIG. 9, the horizontal axis represents the rotary tone amplitude, and the vertical axis represents the Hamiltonian coefficient error. The Hamiltonian coefficient error is the difference between an ideal value and an actual value of a Hamiltonian coefficient. A curve 161 illustrates the error of the Hamiltonian coefficient $\nu_{ZZ}$. A curve 162 illustrates the error of the Hamiltonian coefficient $\nu_{IZ}$. A curve 163 illustrates the error of the Hamiltonian coefficient $\nu_{ZY}$. A curve 164 illustrates the error of the Hamiltonian coefficient $\nu_{IY}$.

In the first stage, the information processing apparatus 100 fixes the pulse length, the CR pulse amplitude, the CR pulse phase, the cancellation tone amplitude, and the cancellation tone phase to predetermined values, and measures the Hamiltonian coefficient error while changing the rotary tone amplitude. In this way, the curves 161, 162, 163, and 164 are calculated.

The information processing apparatus 100 selects, as an initial value, a rotary tone amplitude at which the errors of the plurality of Hamiltonian coefficients are minimized as a whole. For example, the information processing apparatus 100 selects a rotary tone amplitude that minimizes the sum of squares of the Hamiltonian coefficient errors.

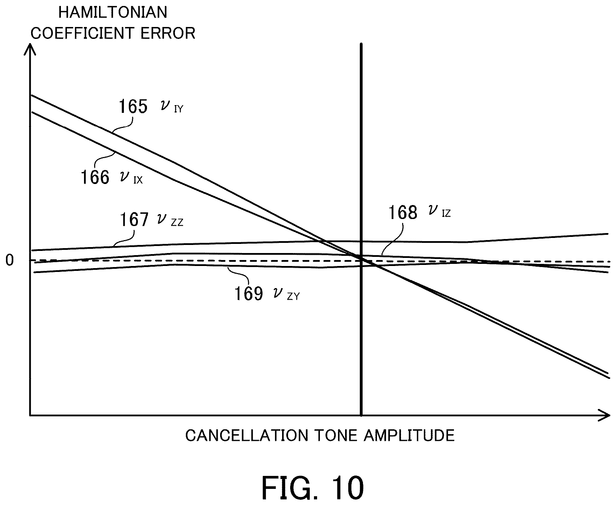

FIG. 10 is a graph illustrating an example of the relationship between the cancellation tone amplitude and the error. In the graph in FIG. 10, the horizontal axis represents the cancellation tone amplitude, and the vertical axis represents the Hamiltonian coefficient error. A curve 165 illustrates the error of the Hamiltonian coefficient $\nu_{IY}$. A curve 166 illustrates the error of the Hamiltonian coefficient $\nu_{IX}$. A curve 167 illustrates the error of the Hamiltonian coefficient $\nu_{ZZ}$. A curve 168 illustrates the error of the Hamiltonian coefficient $\nu_{IZ}$. A curve 169 illustrates the error of the Hamiltonian coefficient $\nu_{ZY}$.

As in the case of FIG. 9, the information processing apparatus 100 fixes the pulse length, the CR pulse amplitude, the CR pulse phase, the cancellation tone phase, and the rotary tone amplitude to predetermined values, and measures the Hamiltonian coefficient error while changing the cancellation tone amplitude. In this way, the curves 165, 166, 167, 168, and 169 are calculated. The information processing apparatus 100 selects, as an initial value, a cancellation tone amplitude at which the errors of the plurality of Hamiltonian coefficients are minimized as a whole.

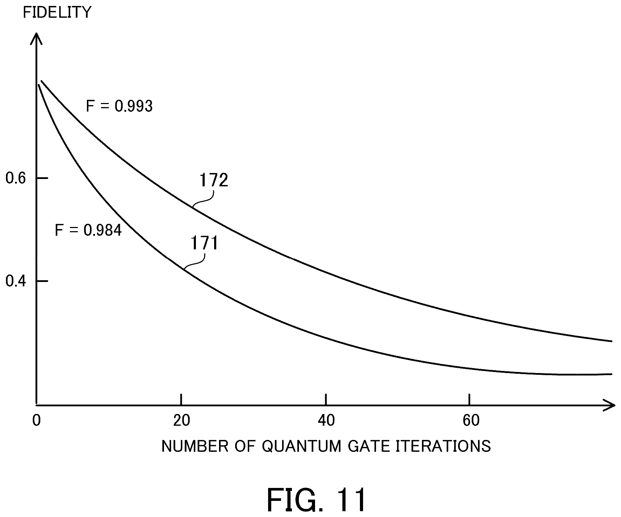

FIG. 11 is a graph illustrating an example of the relationship between the number of quantum gate iterations and the fidelity. In the graph in FIG. 11, the horizontal axis represents the number m of iterations of a quantum gate in ORBIT. The vertical axis indicates the fidelity measured by ORBIT. A curve 171 illustrates the relationship between the number of iterations and the fidelity when the quantum gate is executed using a certain control parameter value. A curve 172 illustrates the number of iterations and the fidelity when the quantum gate is executed using another control parameter value.

By repeatedly applying the same quantum gate to a qubit, the error of the quantum gate is amplified, and consequently, the fidelity gradually decreases. Thus, the fidelity is represented by a curve that descends to the right and protrudes downward with respect to the number of iterations. The information processing apparatus 100 is able to estimate the fidelity when the number of iterations is one by fitting a curve to the measurement result of the fidelity. Next, functions and a processing procedure of the information processing apparatus 100 will be described.

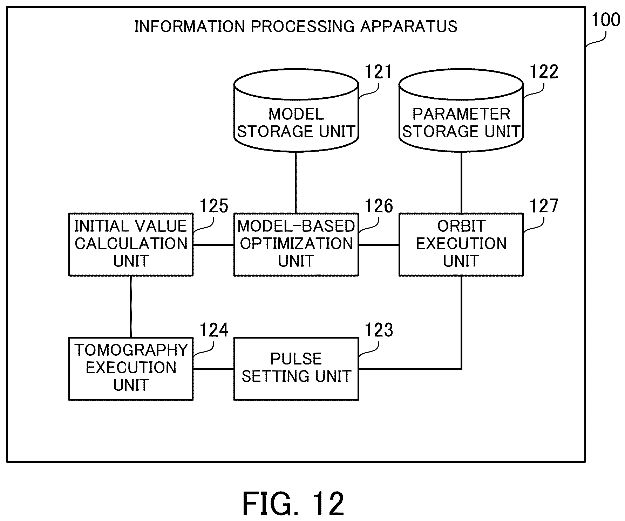

FIG. 12 is a block diagram illustrating a functional example of the information processing apparatus. The information processing apparatus 100 includes a model storage unit 121, a parameter storage unit 122, a pulse setting unit 123, a tomography execution unit 124, an initial value calculation unit 125, a model-based optimization unit 126, and an ORBIT execution unit 127. The model storage unit 121 and the parameter storage unit 122 are implemented using, for example, the RAM 102 or the HDD 103. The pulse setting unit 123, the tomography execution unit 124, the initial value calculation unit 125, the model-based optimization unit, and the ORBIT execution unit 127 are implemented using, for example, the CPU 101 and a program.

The model storage unit 121 stores a model used for model-based optimization. The model includes an error function, a gradient function, and a parameter update formula. The model includes information indicating the relationship between the control parameters of the quantum computer 20 and the search parameters used for the error function. In addition, the model storage unit 121 stores information about the Hamiltonian and the unitary matrix of the quantum gate. Further, the model storage unit 121 stores hyperparameter values such as the weight of the regularization term and convergence conditions.

The parameter storage unit 122 stores the control parameter values determined through the calibration method of the second embodiment. When using the quantum computer 20, the information processing apparatus 100 may transmit the control parameter values stored in the parameter storage unit 122 to the quantum computer 20. The pulse setting unit 123 controls the waveform of an individual microwave pulse signal by transmitting a command designating a control parameter value to the pulse control unit 22 in response to a request from the tomography execution unit 124 or the ORBIT execution unit 127.

The tomography execution unit 124 causes the quantum computer 20 to execute the quantum gate based on the control parameter values designated by the initial value calculation unit 125, and reads out the measurement values of the qubit from the quantum computer 20. The tomography execution unit 124 statistically analyzes the measurement values and executes Hamiltonian tomography for estimating the Hamiltonian coefficients of the quantum gate.

The initial value calculation unit 125 selects an initial value for each of the plurality of control parameters. The initial value calculation unit 125 causes the tomography execution unit 124 to execute Hamiltonian tomography while changing the value of one control parameter and fixing the values of the other control parameters to predetermined values. The initial value calculation unit 125 selects a control parameter value that minimizes the error component from the relationship between the value of the one control parameter and the error component of the Hamiltonian. The initial value calculation unit 125 outputs the selected initial value to the model-based optimization unit 126.

The model-based optimization unit 126 performs model-based optimization using the model stored in the model storage unit 121. The model-based optimization unit 126 repeatedly calculates an error from the individual current control parameter value using the error function, and varies the control parameter value by an update amount corresponding to the current gradient using the gradient function and the parameter update formula. The model-based optimization unit 126 starts this search process with the initial values selected by the initial value calculation unit 125, and outputs the control parameter values obtained at the time of convergence to the ORBIT execution unit 127.

The ORBIT execution unit 127 executes ORBIT. The ORBIT execution unit 127 causes the quantum computer 20 to execute a quantum gate under certain control parameter values, and measures the fidelity of the quantum gate. The ORBIT execution unit 127 repeats updating the control parameter values so as to increase the fidelity. The ORBIT execution unit 127 starts this search process with the control parameter values, which has been output by the model-based optimization unit 126, and stores the control parameter values obtained at the time of convergence in the parameter storage unit 122. The ORBIT execution unit 127 may display the control parameter values on the display device 111 or may transmit the control parameter values to another information processing device.

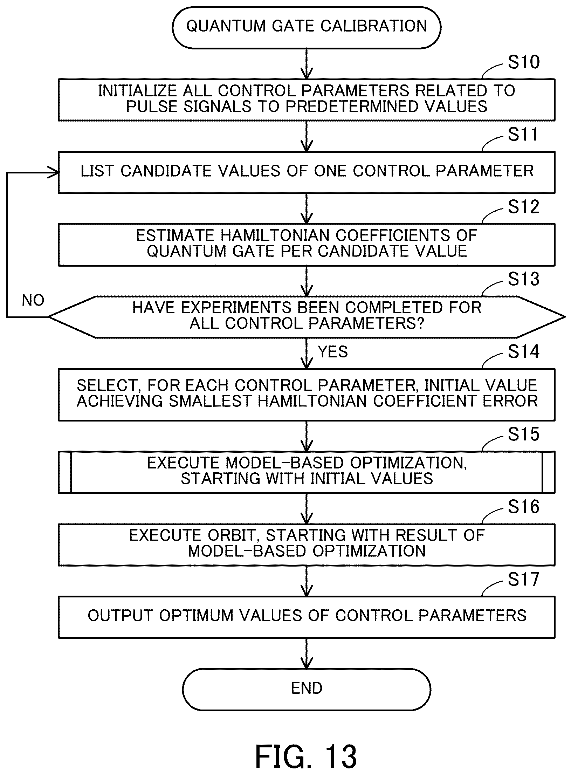

FIG. 13 is a flowchart illustrating a procedure example of quantum gate calibration. In step S10, the initial value calculation unit 125 initializes all the control parameters related to the individual microwave pulse signals of the quantum gate to be calibrated to predetermined values of the quantum computer 20. In step S11, the initial value calculation unit 125 selects one of the control parameters. The initial value calculation unit 125 lists the candidate values of the selected control parameter. For example, the initial value calculation unit 125 extracts 20 control parameter values at equal intervals from the value range of the control parameter.

In step S12, the tomography execution unit 124 executes Hamiltonian tomography on each of the candidate values listed in step S11. The pulse setting unit 123 changes the value of the selected control parameter to the candidate values, and the tomography execution unit 124 causes the quantum computer 20 to execute the quantum gate. The tomography execution unit 124 analyzes the execution result of the quantum gate and estimates the Hamiltonian coefficients of the quantum gate.

In step S13, the initial value calculation unit 125 determines whether the experiments in steps S11 and S12 have been completed for all the control parameters. If the experiments on all the control parameters are completed, the process proceeds to step S14. Otherwise, the process returns to step S11.

In step S14, the initial value calculation unit 125 selects, for each control parameter, a candidate value achieving the smallest Hamiltonian coefficient error among the plurality of candidate values, as an initial value. The initial value calculation unit 125 may select an untried control parameter value as the initial value from the regression curve indicating the relationship between the control parameter value and the error component. In step S15, the model-based optimization unit 126 executes model-based optimization, starting with the initial values selected in step S14. Details of the model-based optimization will be described later.

In step S16, the ORBIT execution unit 127 executes ORBIT, starting with the control parameter values calculated by the model-based optimization in step S15. The pulse setting unit 123 sets the current values to the plurality of control parameters, and the ORBIT execution unit 127 causes the quantum computer 20 to execute the quantum gate. The ORBIT execution unit 127 analyzes the execution result of the quantum gate, and measures the fidelity of the quantum gate. The ORBIT execution unit 127 updates the values of the plurality of control parameters so as to increase the fidelity. In step S17, the ORBIT execution unit 127 outputs the optimum values of the control parameters.

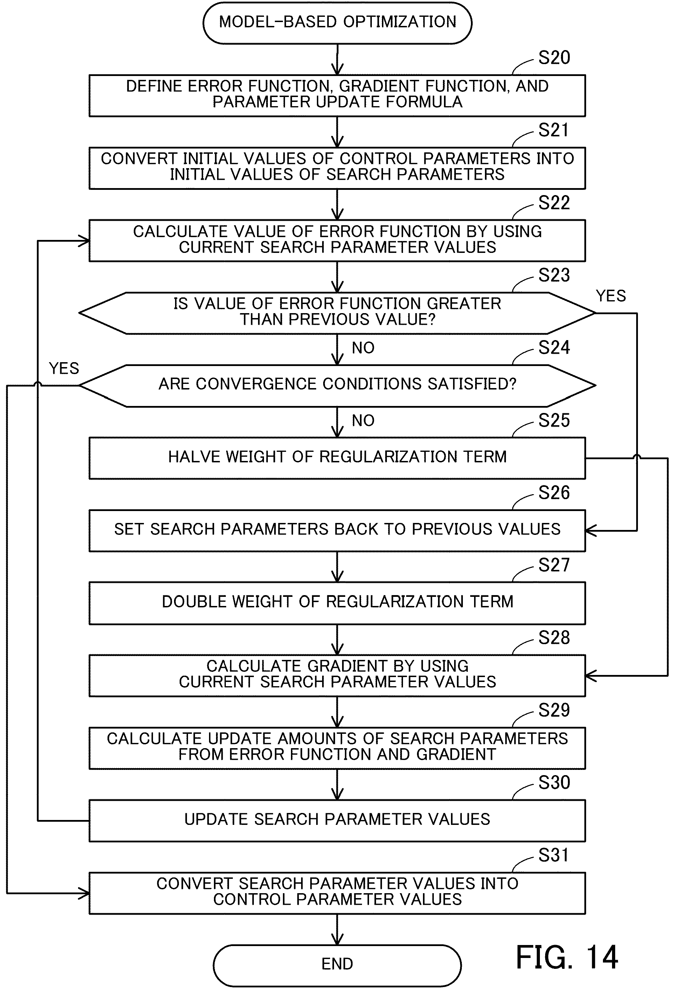

FIG. 14 is a flowchart illustrating a procedure example of model-based optimization. In step S20, the model-based optimization unit 126 defines an error function, a gradient function, and a parameter update formula for the quantum gate to be calibrated. In step S21, the model-based optimization unit 126 converts the initial values of the plurality of control parameters selected in step S14 described above into the initial values of the plurality of search parameters used by the error function.

In step S22, the model-based optimization unit 126 calculates the value of the error function by using the current search parameter values. In step S23, the model-based optimization unit 126 determines whether the value of the error function is greater than the previous value (whether the error has deteriorated). If the value of the error function is greater than the previous value, the process proceeds to step S26. Otherwise, the process proceeds to step S24. If there is no previous error, the process proceeds to step S24.

In step S24, the model-based optimization unit 126 determines whether the convergence conditions are satisfied. The convergence conditions are, for example, that the change rate of the value of the error function is less than 0.1% and that the change rates of all the search parameter values are less than 0.1%. If the convergence conditions are satisfied, the process proceeds to step S31. Otherwise, the process proceeds to step S25.

In step S25, the model-based optimization unit 126 halves the weight $\lambda$ of the regularization term included in the parameter update formula. Accordingly, the update amount of the individual search parameter is likely to increase. Next, the process proceeds to step S28. In step S26, the model-based optimization unit 126 sets the search parameters back to the previous values. In step S27, the model-based optimization unit 126 doubles the weight $\lambda$ of the regularization term included in the parameter update formula. Accordingly, the update amount of the individual search parameter is maintained at a small amount.

In step S28, the model-based optimization unit 126 calculates a gradient from the gradient function by using the current values of the search parameters. In step S29, the model-based optimization unit 126 calculates the update amounts of the search parameters from the error function and the gradient in accordance with the parameter update formula. In step S30, the model-based optimization unit 126 updates the current values of the search parameters by adding the update amounts to the current values. Next, the process returns to step S22. In step S31, the model-based optimization unit 126 converts the values of the plurality of search parameters at the time of convergence into the values of the plurality of control parameters.

As described above, the information processing apparatus 100 according to the second embodiment calibrates a two-input quantum gate by adjusting the waveforms of a plurality of microwave pulse signals. This improves the implementation accuracy of the two-input quantum gate based on the CR method.

The information processing apparatus 100 executes Hamiltonian tomography for each control parameter, to select initial values. As a result, the accuracy of the model-based optimization is improved and the execution time of the model-based optimization is shortened, as compared with the case where the model-based optimization is executed with the predetermined values held by the quantum computer 20.

Further, the information processing apparatus 100 executes model-based optimization using an error function before ORBIT. As a result, it is possible to start ORBIT with control parameter values close to optimum values, and the execution time of ORBIT is shortened. In addition, since the model-based optimization takes into account the dependence among the plurality of control parameters, it is possible to calculate control parameter values close to optimum values. Finally, control parameter values that minimize the error of the quantum gate are searched by ORBIT. Thus, the information processing apparatus 100 is able to efficiently calibrate a two-input quantum gate.

In one aspect, quantum gates are calibrated more efficiently.

**Claims**

1. A computer program that causes a computer to execute a process comprising:

   selecting a first value (14a, 15a, 16a) for each of a plurality of control parameters (14 to 16) for controlling a plurality of pulse signals used by a quantum computer in executing a multi-input quantum gate;
   estimating a first error from the first values by using an error function (13) for estimating an error between an ideal value and an actual value of the multi-input quantum gate from values of the plurality of control parameters;
   searching for a second value (14b, 15b, 16b) of each of the plurality of control parameters by using the error function such that a second error estimated from the second values is less than the first error; and
   acquiring a result obtained by executing the multi-input quantum gate by using the second values from the quantum computer, and determining a third value (14c, 15c, 16c) to be set to each of the plurality of control parameters by using the result.

2. The computer program according to claim 1, wherein the selecting includes measuring an error component (161 to 164) included in a Hamiltonian of the multi-input quantum gate while changing a value of one control parameter (f) of the plurality of control parameters and fixing values of the other control parameters, and selecting a value of the one control parameter that minimizes the measured error component as the first value for the one control parameter, by using the quantum computer.

3. The computer program according to claim 1 or claim 2, wherein the error function (E) indicates a sum of squares of components included in a matrix difference between a first unitary matrix (ZX) indicating the ideal value and a second unitary matrix (U) indicating the actual value.

4. The computer program according to any preceding claim, wherein

the error function has a plurality of search parameters including coefficients (152) of a Hamiltonian of the multi-input quantum gate, which are mutually convertible with the plurality of control parameters (151), and
the searching includes searching for a fourth value for each of the plurality of search parameters by using the error function (E), and converting the fourth values into the second values.

5. The computer program according to claim 4, wherein the searching includes repeatedly updating values of the plurality of search parameters by using a gradient of the error function ($e_s$) with respect to the plurality of search parameters ($p_i$) and a regularization term having a weight ($\lambda$) that varies based on an error estimated by the error function.

6. The computer program according to any preceding claim, wherein the plurality of control parameters include an amplitude ($\varepsilon_{CR}$) and a phase ($\varphi_{CR}$) of a first pulse signal among the plurality of pulse signals, an amplitude ($\varepsilon_C$) and a phase ($\varphi_C$) of a second pulse signal among the plurality of pulse signals, and pulse lengths (t) of the first pulse signal and the second pulse signal.

7. A quantum gate calibration method executed by a computer, the quantum gate calibration method comprising:

selecting a first value (14a, 15a, 16a) for each of a plurality of control parameters (14 to 16) for controlling a plurality of pulse signals used by a quantum computer in executing a multi-input quantum gate;
estimating a first error from the first values by using an error function (13) for estimating an error between an ideal value and an actual value of the multi-input quantum gate from values of the plurality of control parameters;
searching for a second value (14b, 15b, 16b) of each of the plurality of control parameters by using the error function such that a second error estimated from the second values is less than the first error; and
acquiring a result obtained by executing the multi-input quantum gate by using the second values from the quantum computer, and determining a third value (14c, 15c, 16c) to be set to each of the plurality of control parameters by using the result.

8. An information processing apparatus comprising:

memory means (11) for storing an error function (13) for estimating an error between an ideal value and an actual value of a multi-input quantum gate from values of a plurality of control parameters (14 to 16) for controlling a plurality of pulse signals used by a quantum computer in executing the multi-input quantum gate; and
processing means (12) for:

selecting a first value (14a, 15a, 16a) for each of the plurality of control parameters,
estimating a first error from the first values by using the error function,
searching for a second value (14b, 15b, 16b) of each of the plurality of control parameters by using the error function such that a second error estimated from the second values is less than the first error,
acquiring a result obtained by executing the multi-input quantum gate by using the second values from the quantum computer, and
determining a third value (14c, 15c, 16c) to be set to each of the plurality of control parameters by using the result.

INFORMATION PROCESSING APPARATUS — 10

STORAGE UNIT — 11

ERROR FUNCTION
$E(t, \varepsilon_1, \varepsilon_2)$ — 13

| CONTROL PARAMETERS | $t$ | $\varepsilon_1$ | $\varepsilon_2$ |
|---|---|---|---|
| | 14 | 15 | 16 |
| FIRST VALUES | 190 ns | −2.8 dBm | −18 dBm |
| | 14a | 15a | 16a |
| SECOND VALUES | 195 ns | −2.9 dBm | −19 dBm |
| | 14b | 15b | 16b |
| THIRD VALUES | 200 ns | −3 dBm | −20 dBm |
| | 14c | 15c | 16c |

PROCESSING UNIT — 12

FIG. 1

FIG. 2

FIG. 3

141

TIME

142

TIME

FIG. 4

CONTROL BIT                                    TARGET BIT

FIG. 5

FIG. 6

151

| CONTROL PARAMETERS | VALUES |
|---|---|
| PULSE LENGTH t | 200 ns |
| CR PULSE AMPLITUDE $\varepsilon_{CR}$ | −3 dBm |
| CR PULSE PHASE $\phi_{CR}$ | 5 degree |
| CANCELLATION TONE AMPLITUDE $\varepsilon_C$ | −20 dBm |
| CANCELLATION TONE PHASE $\phi_C$ | −170 degree |
| ROTARY TONE AMPLITUDE f | −15 dBm |

# FIG. 7

152

| HAMILTONIAN COEFFICIENTS | VALUES |
|---|---|
| $\nu_{IX}$ | 0.001 MHz |
| $\nu_{IY}$ | 0.001 MHz |
| $\nu_{IZ}$ | 0.01 MHz |
| $\nu_{ZI}$ | 300 MHz |
| $\nu_{ZX}$ | 2 MHz |
| $\nu_{ZY}$ | 0.001 MHz |
| $\nu_{ZZ}$ | 0.01 MHz |

# FIG. 8

HAMILTONIAN
COEFFICIENT ERROR

161 $\nu_{ZZ}$

162 $\nu_{IZ}$

163 $\nu_{ZY}$

0

164 $\nu_{IY}$

ROTARY TONE AMPLITUDE

FIG. 9

FIG. 10

FIDELITY

F = 0.993

172

0.6

F = 0.984

171

0.4

0          20          40          60

NUMBER OF QUANTUM GATE ITERATIONS

FIG. 11

FIG. 12

QUANTUM GATE CALIBRATION

S10
INITIALIZE ALL CONTROL PARAMETERS RELATED TO
PULSE SIGNALS TO PREDETERMINED VALUES

S11
LIST CANDIDATE VALUES OF ONE CONTROL PARAMETER

S12
ESTIMATE HAMILTONIAN COEFFICIENTS OF
QUANTUM GATE PER CANDIDATE VALUE

S13
NO HAVE EXPERIMENTS BEEN COMPLETED FOR
ALL CONTROL PARAMETERS?

YES S14
SELECT, FOR EACH CONTROL PARAMETER, INITIAL VALUE
ACHIEVING SMALLEST HAMILTONIAN COEFFICIENT ERROR

S15
EXECUTE MODEL-BASED OPTIMIZATION,
STARTING WITH INITIAL VALUES

S16
EXECUTE ORBIT, STARTING WITH RESULT OF
MODEL-BASED OPTIMIZATION

S17
OUTPUT OPTIMUM VALUES OF CONTROL PARAMETERS

END

FIG. 13

MODEL-BASED OPTIMIZATION

S20
DEFINE ERROR FUNCTION, GRADIENT FUNCTION, AND
PARAMETER UPDATE FORMULA

S21
CONVERT INITIAL VALUES OF CONTROL PARAMETERS INTO
INITIAL VALUES OF SEARCH PARAMETERS

S22
CALCULATE VALUE OF ERROR FUNCTION BY USING
CURRENT SEARCH PARAMETER VALUES

S23
IS VALUE OF ERROR FUNCTION GREATER
THAN PREVIOUS VALUE? — YES

NO

S24
ARE CONVERGENCE CONDITIONS SATISFIED?

YES

NO

S25
HALVE WEIGHT OF REGULARIZATION TERM

S26
SET SEARCH PARAMETERS BACK TO PREVIOUS VALUES

S27
DOUBLE WEIGHT OF REGULARIZATION TERM

S28
CALCULATE GRADIENT BY USING
CURRENT SEARCH PARAMETER VALUES

S29
CALCULATE UPDATE AMOUNTS OF SEARCH PARAMETERS
FROM ERROR FUNCTION AND GRADIENT

S30
UPDATE SEARCH PARAMETER VALUES

S31
CONVERT SEARCH PARAMETER VALUES INTO
CONTROL PARAMETER VALUES

END

FIG. 14

## EUROPEAN SEARCH REPORT

**Application Number**

EP 25 21 2947

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NICOLAS WITTLER ET AL: "Integrated tool-set for Control, Calibration and Characterization of quantum devices applied to superconducting qubits", ARXIV.ORG, CORNELL UNIVERSITY LIBRARY, 201 OLIN LIBRARY CORNELL UNIVERSITY ITHACA, NY 14853, 2 December 2022 (2022-12-02), XP091384130, DOI: 10.1103/PHYSREVAPPLIED.15.034080 * Sections II-IV * * Section V * * Appendix C * ----- | 1-8 | INV. G06N10/40 G06N5/01 |
| A | Anonymous: "C3 - Entangling gate on two coupled qubits Imports", , 30 August 2022 (2022-08-30), XP093373029, Retrieved from the Internet: URL:https://github.com/q-optimize/c3/blob/ 2d95723a7c7db2149e65ebe8428867d5bbea4050/e xamples/two_qubit_entangling_gate.ipynb [retrieved on 2026-03-04] * page 15 - page 21 * ----- | 1-8 | |

**TECHNICAL FIELDS SEARCHED (IPC)**

G06N

The present search report has been drawn up for all claims

| Place of search | Date of completion of the search | Examiner |
|---|---|---|
| The Hague | 4 March 2026 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20110298489
- WO 2015160401 A
- WO 2017075246 A
- WO 2019005206 A

### Non-patent literature cited in the description

- **J. KELLY ; R. BARENDS ; B. CAMPBELL ; Y. CHEN ; Z. CHEN ; B. CHIARO ; A. DUNSWORTH ; A.G. FOWLER ; I. HOI ; E. JEFFREY**. Optimal Quantum Control Using Randomized Benchmarking. *Physical Review*, June 2014, vol. 112 (24)

- **PETAR JURCEVIC ; ALI JAVADI-ABHARI ; LEV S. BISHOP ; ISAAC LAUER ; DANIELA F. BOGORIN ; MARKUS BRINK ; LAUREN CAPELLUTO ; OKTAY GUNLUK ; TOSHINARI ITOKO ; NAOKI KANAZA-WA**. Demonstration of Quantum Volume 64 on a Superconducting Quantum Computing System. *Quantum Science and Technology*, March 2021, vol. 6 (2)